Europäisches Patentamt

European Patent Office

Office européen des brevets

(19)

(11) Veröffentlichungsnummer: **0 181 456**
**B1**

(12) **EUROPÄISCHE PATENTSCHRIFT**

(45) Veröffentlichungstag der Patentschrifft:
28.02.90

(21) Anmeldenummer: 85111280.5

(22) Anmeldetag: 06.09.85

(51) Int. Cl.⁵: **B 23 B   5/32**

(54) Unterflur-Radsatzdrehmaschine zum Reprofilieren der Radreifenumrisse von Eisenban-Radsätzen.

(30) Priorität: 15.11.84 DE 8433487 U

(43) Veröffentlichungstag der Anmeldung:
21.05.86 Patentblatt 86/21

(45) Bekanntmachung des Hinweises auf die Patenterteilung:
28.02.90 Patentblatt 90/09

(84) Bennante Vertragsstaaten:
AT BE CH DE FR GB IT LI LU NL SE

(56) Entgegenhaltungen:
DE-B-1 141 156
DE-B-1 261 372
DE-B-2 021 820
DE-C-1 043 020
DE-U-8 433 487
FR-A-1 269 726
FR-A-2 465 540
US-A-3 367 160

(73) Patentinhaber: **Hoesch Aktiengesellschaft**
**Eberhardstrasse 12**
**D-4600 Dortmund 1 (DE)**

(72) Erfinder: **Brinkmann, Dirk, Dipl.-Ing.**
**In der Heide 9**
**D-4670 Lünen-Niederaden (DE)**
Erfinder: **Gutöhrlein, Uwe, Dipl.-Ing.**
**Wetteweg 9**
**D-4600 Dortmund 30 (DE)**

LIBERGRAF, STOCKHOLM 1990

**Beschreibung**

Die Erfindung bezieht sich auf eine Unterflur-Radsatzdrehmaschine zum Reprofilieren der Radreifenumrisse von Eisenbahn-Radsätzen, mit zwei angetriebenen Reibrollenpaaren, die je an einen Radreifenumriß eines Radsatzes andrückbar sind, wobei die Reibrollen eines jeden Reibrollenpaares einzeln um je eine parallel zur Radsatzachse angeordnete Schwenkachse schwenkbar sind.

Bei einer solchen Unterflur-Radsatzdrehmaschine nach der FR-A-1 269 726 wird jedes Reibrollenpaar von zwei Drehantrieben angetrieben, von denen jeder aus einem Getriebemotor und einer Gelenkwelle besteht.

Derartige Drehantriebe für ein Reibrollenpaar sind verhältnismäßig aufwendig.

Der Erfindung liegt die Aufgabe zugrunde, für jedes Reibrollenpaar einer Unterflur-Radsatzdrehmaschine der eingangs genannten Art einen Drehantrieb zu schaffen, der mit geringerem Aufwand hergestellt werden kann.

Erfindungsgemäß wird diese Aufgabe dadurch gelöst, daß jedem Reibrollenpaar ein Drehantrieb zugeordnet ist, der einen Motor, ein aus zwei Riementrieben bestehendes Verteilergetriebe und zwei Stirnradgetriebe aufweist, wobei jeder Motor über die Riementriebe mit den Stirnradgetrieben verbunden ist, und daß jedes Stirnradgetriebe mit seiner Eingangswelle um die Schwenkachse schwenkbar angeordnet und mit seiner Abtriebswelle mit der Reibrolle verbunden ist.

Zweckmäßigerweise sind die Stirnradgetriebe gleich ausgebildet.

Jedes Stirnradgetriebe kann als Aufsteckgetriebe ausgebildet sein.

Durch die Erfindung werden vorteilhaft geringe Drehzahlunterschiede der beiden Reibrollen eines Reibrollenpaares, die durch Durchmesserunterschiede der Reibrollen und Flachstellen an dem Radreifenumriß begründet sind, durch den Dehnschlupf der Riementriebe des Verteilergetriebes ausgeglichen.

Im folgenden wird die Erfindung anhand einer Zeichnung, in der ein Ausführungsbeispiel schematisch dargestellt ist, näher beschrieben.

Es zeigt

Fig. 1 eine Unterflur-Radsatzdrehmaschine und einen von ihr aufgenommenen Radsatz in Ansicht mit einer Teilansicht eines auf dem Radsatz aufliegenden Fahrzeugaufbaus, mit einem Schnitt durch zwei Einlaufschienen und zwei Schienenträger und mit einem Teilschnitt durch ein Fundament,

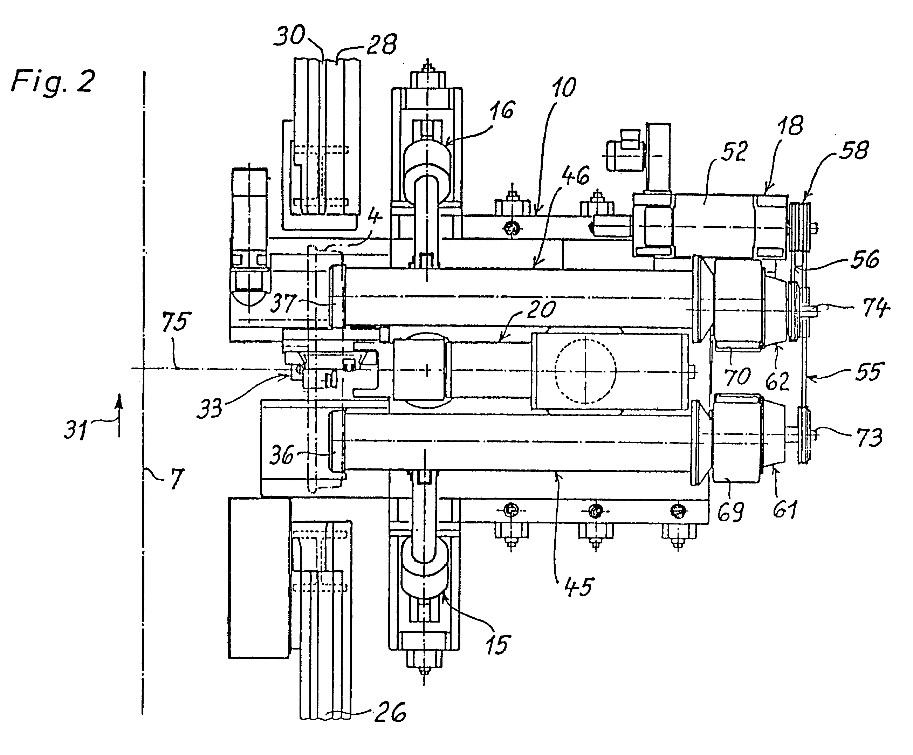

Fig. 2 die rechte Maschineneinheit der Unterflur-Radsatzdrehmaschine im Grundriß mit strichpunktierter Darstellung des rechten Radreifenumrisses des aufgenommenen Radsatzes in vergrößertem Maßstab,

Fig. 3 einen Schnitt entsprechend der Linie III - III in Fig. 1 in vergrößertem Maßstab,

Fig. 4 eine Seitenansicht der Unterflur-Radsatzdrehmaschine und den von ihr aufgenommen Radsatzes in Richtung des Pfeiles A in Fig. 1 mit einem Teilschnitt durch das Fundament in vergrößertem Maßstab,

Fig. 5 einen Schnitt durch die rechte Maschinen- einheit der Unterflur-Radsatzdrehmachine entsprechend der Linie V - V in Fig. 4.

Eine Unterflur-Radsatzdrehmaschine 1, die fest mit einem Fundament 2 verbunden ist, wird eingesetzt zum Reprofilieren der Radreifenumrisse 3, 4 eines in einem Schienenfahrzeug 5 eingebauten Radsatzes 6.

Die Unterflur-Radsatzdrehmaschine 1 hat zwei symmetrisch zur Mitte 7 eines Fahrgleises 8 angeordnete Maschineneinheiten 9, 10, von denen jede ein Reibrollenpaar 11, 12 mit zwei Schwenkantrieben 13, 14, 15, 16 und einem Drehantrieb 17, 18, eine Niederhaltevorrichtung 19, 20 sowie eine Stützvorrichtung 21, 22 für einen Achslagerkasten 23, 24 des Radsatzes 6 aufweist.

Zu dem Fahrgleis 8 gehören je zwei Einlaufschienen 25, 26 und Auslaufschienen 27, 28 sowie zwei Überbrückungsschienen 29, 30 zum Überbrücken des Bereichs zwischen den Einlaufschienen 25, 26 und Auslaufschienen 27, 28.

Die Überbrückungsschienen 29, 30 sind in Fahrgleisrichtung 31 verschiebbar angeordnet, damit sie aus dem Arbeitsbereich der beiden Drehsupporte 32, 33 entfernt werden können.

Die Reibrollenpaare 11, 12 bestehen aus je zwei Reibrollen 34, 35, 36, 37, von denen jede auf eine parallel zur Radsatzachse 38 angeordneten Welle 39, 40, 41, 42 sitzt.

Jede Welle 39, 40, 41, 42 ist zweifach in einer Schwinge 43, 44, 45, 46 mit einer parallel zur Radsatzachse 38 verlaufenden Schwenkachse 47, 48, 49, 50 gelagert.

Die Schwingen 43, 44, 45, 46 sind jeweils an einem Schwenkantrieb 13, 14, 15, 16 gelenkig angeschlossen.

Die Reibrollen 34, 35, 36, 37 eines jeden Reibrollenpaares 11, 12 sind mit einem Drehantrieb 17, 18 verbunden, der einen Motor 51, 52, ein aus zwei Riementrieben 53, 54, 55, 56 bestehendes Verteilergetriebe 57, 58 und zwei Stirnradgetriebe 59, 60, 61, 62 aufweist.

Alle Stirnradgetriebe 59, 60, 61, 62 sind völlig gleich ausgeführt.

Jedes Stirnradgetriebe 59, 60, 61, 62 ist ein Aufsteckgetriebe, dessen hohle Abtriebswelle 63, 64, 65, 66 auf eine Welle 39, 40, 41, 42 gesteckt ist.

Das Gehäuse 67, 68, 69, 70 eines jeden Stirnradgetriebes 59, 60, 61, 62 ist durch Schrauben (nicht dargestellt) fest mit einer Schwinge 43, 44, 45, 46 verbunden.

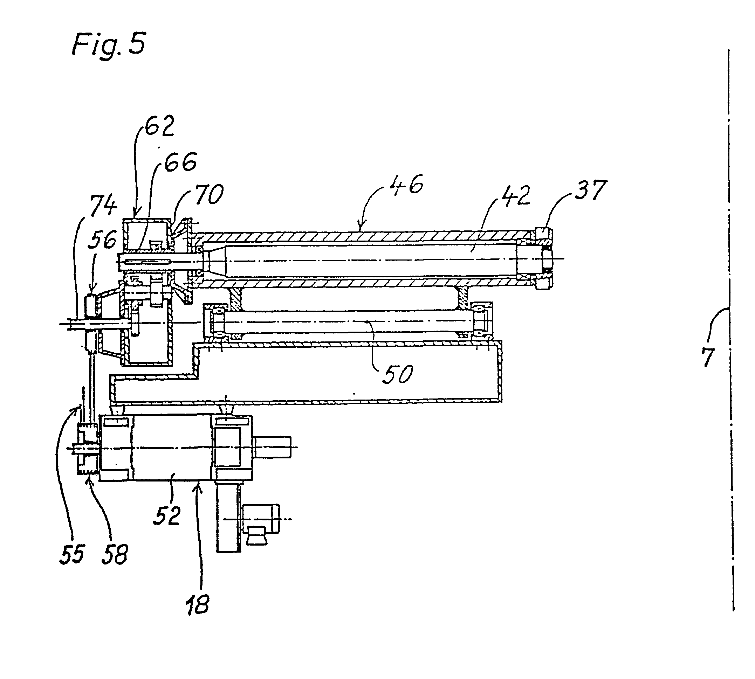

Die Eingangswelle 71, 72, 73, 74 eines jeden Stirnradgetriebes 59, 60, 61, 62 ist achsgleich zu einer Schwenkachse 47, 48, 49, 50 angeordnet, damit während der Schwenkbewegung der Reibrollen 34, 35, 36, 37 die Achsabstände der Riementriebe 53, 54, 55, 56 unverändert bleiben. (Fig. 5)

Beim Einbringen des Radsatzes 6 in die Unterflur-Radsatzdrehmaschine 1 wurde er zunächst über die Einlaufschienen 25, 26 und die Überbrückungsschienen 29, 30 in Fahrgleisrichtung 31 bis zur Maschinenmitte 75 gerollt. Danach wurde der Radsatz 6 durch Schwenken der Reibrollen 34, 35, 36, 37 in Richtung zur Maschinenmitte 75 etwas über das Fahrgleisniveau angehoben.

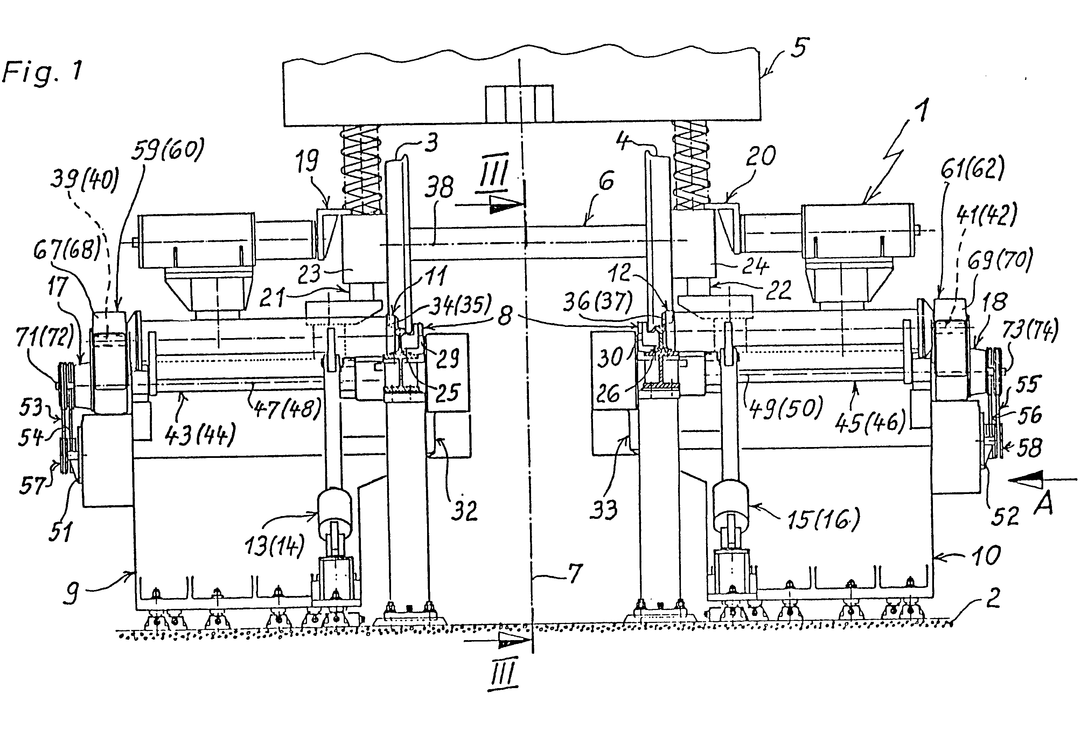

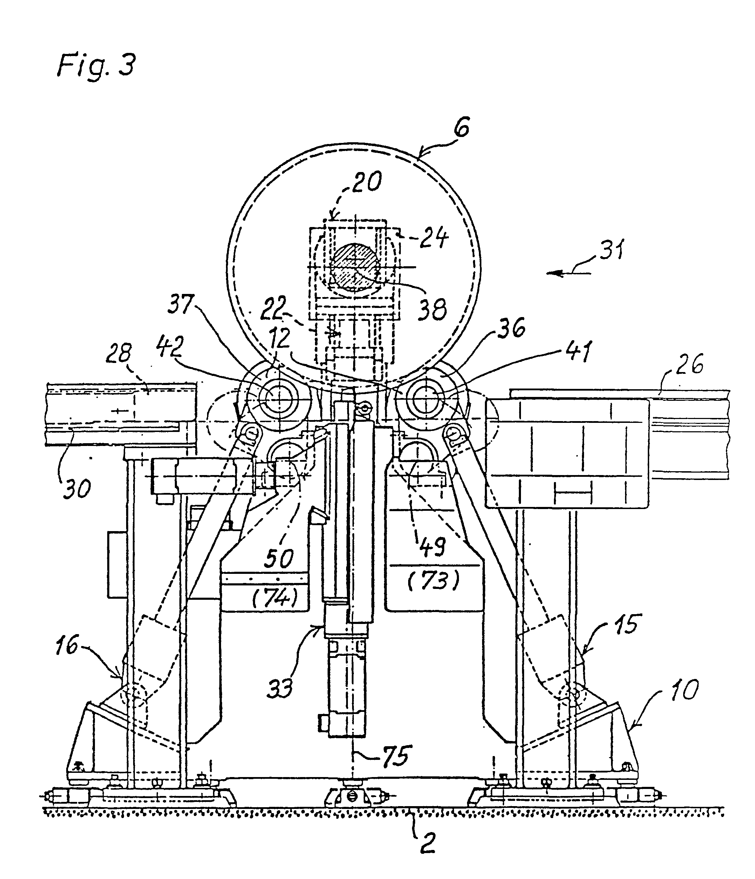

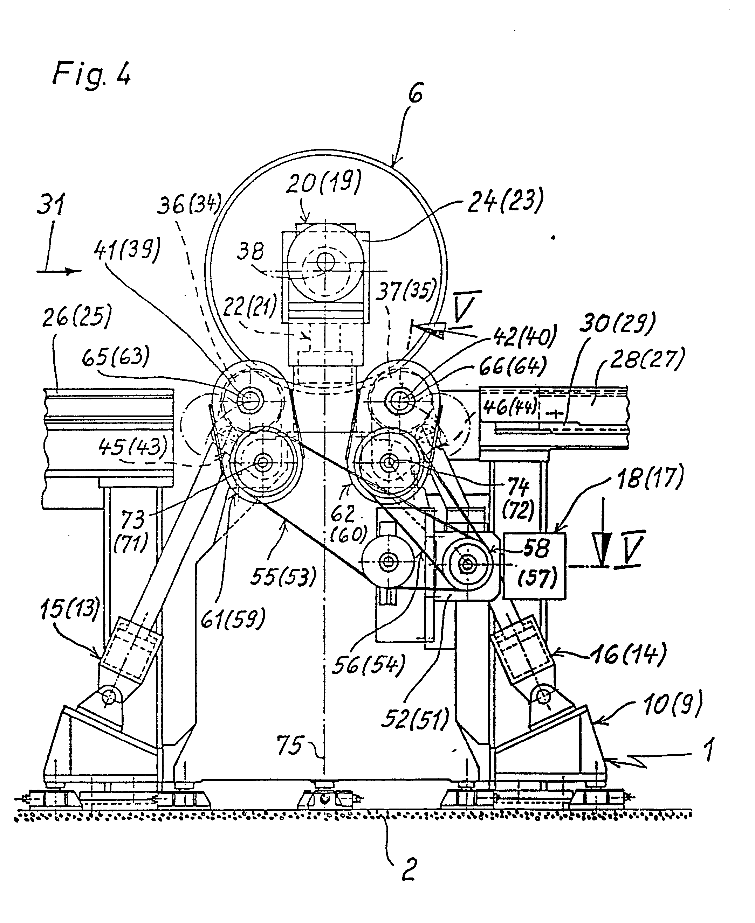

In der angehobenen Stellung das Radsatzes 6 wurden nacheinander die Überbrückungsschienen 29, 30 in Fahrgleichsrichtung 31 aus dem Arbeitsbereich der Drehsupporte 32, 33 bewegt und die beiden Achslagerkästen 23, 24 des Radsatzes 6 durch die Niederhaltevorrichtung 19, 20 und die Stützvorrichtungen 21, 22 arretiert (Fig. 1, 3 und 4).

In der in den Fig. 1, 3 und 4 dargestellten Position des Radsatzes 6 erfolgt die Reprofilierung der Radreifenumrisse 3, 4 durch die Drehsupporte 32, 33. Hierbei erteilen die Drehantriebe 17, 18 den Reibrollen 34, 35, 36, 37 und dem Radsatz 6 eine Drehbewegung.

Nach der Reprofilierung dar Radreifenumrisse 3, 4 werden nacheinander die Drehsupporte 32, 33 aus dem Arbeitsbereich zurückgefahren, die Überbrückungsschienen 29, 30 in den Bereich zwischen die Einlaufschienen 25, 26 und die Auslaufschienen 27, 28 bewegt und der Radsatz 6 durch Verschwenken der Reibrollen 34, 35, 36, 37 auf die Überbrückungsschienen 29, 30 abgesenkt.

Anschließend wird der Radsatz 6 über die Überbrückungsschienen 29, 30 und die Auslaufschienen 27, 28 aus der Unterflur-Radsatzdrehmaschine 1 gerollt. Hiernach steht die Unterflur-Radsatzdrehmaschine 1 zur Reprofilierung der Radreifenumrisse eines anderen Radsatzes zur Verfügung.

## Ziffernliste

| 1 | Unterflur-Radsatzdrehmaschine |
|---|---|
| 2 | Fundament |
| 3, 4 | Radreifenumriß |
| 5 | Schienenfahrzeug |
| 6 | Radsatz |
| 7 | Mitte |
| 8 | Fahrgleis |
| 9, 10 | Maschineneinheit |
| 11, 12 | Reibrollenpaar |
| 13, 14, | |
| 15, 16 | Schwenkantrieb |
| 17, 18 | Drehantrieb |
| 19, 20 | Niederhaltevorrichtung |
| 21, 22 | Stützvorrichtung |
| 23, 24 | Achslagerkasten |
| 25, 26 | Einlaufschiene |
| 27, 28 | Auslaufschiene |
| 29, 30 | Überbrückungsschiene |

| 31 | Fahrgleisrichtung |
|---|---|
| 32, 33 | Drehsupport |
| 34, 35, | |
| 36, 37 | Reibrolle |
| 38 | Radsatzachse |
| 39, 40, | |
| 41, 42 | Welle |
| 43, 44 | |
| 45, 46 | Schwinge |
| 47, 48 | |
| 49, 50 | Schwenkachse |
| 51, 52 | Motor |
| 53, 54, | |
| 55, 56 | Riementrieb |
| 57, 58 | Verteilergetriebe |
| 59, 60, | |
| 61, 62 | Stirnradgetriebe |
| 63, 64 | |
| 65, 66 | Abtriebswelle |
| 67, 68, | |
| 69, 70 | Gehäuse |
| 71, 72, | |
| 73, 74 | Eingangswelle |
| 75 | Maschinenmitte |

## Patentansprüche

1. Unterflur-Radsatzdrehmaschine zum Reprofilieren der Radreifenumrisse von Eisenbahn-Radsätzen, mit zwei angetriebenen Reibrollenpaaren (11, 12), die je an einen Radreifenumriß (3, 4) eines Radsatzes (6) andrückbar sind, wobei die Reibrollen (34, 35, 36, 37) eines jeden Reibrollenpaares (11, 12) einzeln um je eine parallel zur Radsatzachse (38) angeordnete Schwenkachse (47, 48, 49, 50) schwenkbar sind, *dadurch gekennzeichnet,* daß jedem Reibrollenpaar (11, 12) ein Drehantrieb (17, 18) zugeordnet ist, der einen Motor (51, 52), ein aus zwei Riementrieben (53, 54, 55, 56) bestehendes Verteilergetriebe (57, 58) und zwei Stirnradgetriebe (59, 60, 61, 62) aufweist, wobei jeder Motor (51, 52) über die Riementriebe (53, 54, 55, 56) mit den Stirnradgetrieben (59, 60, 61, 62) verbunden ist, und daß jedes Stirnradgetriebe (59, 60, 61, 62) mit seiner Eingangswelle (71, 72, 73, 74) um die Schwenkachse (47, 48, 49, 50) schwenkbar angeordnet und mit seiner Abtriebswelle (63, 64, 65, 66) mit der Reibrolle (34, 35, 36, 37) verbunden ist.

2. Unterflur-Radsatzdrehmaschine nach Anspruch 1, *dadurch gekennzeichnet,* daß die Stirnradgetriebe (59, 60, 61, 62) gleich ausgebildet sind.

3. Unterflur-Radsatzdrehmaschine nach Anspruch 1, *dadurch gekennzeichnet,* daß jedes Stirnradgetriebe (59, 60, 61, 62) ein Aufsteckgetriebe ist.

## Claims

1. Underfloor wheel set lathe for reprofiling the contours of wheel rims of railway wheel sets with two driven friction roller pairs (11, 12), which can each be pressed against a contour of a wheel rim (3, 4) of a wheel set where the friction rollers (34, 35, 36, 37) of each pair of friction rollers (11, 12) can each swivel separately about a swivel axis (47, 48, 49, 50) located in parallel to the wheel set axis (38), characterised in that each pair of friction rollers (11, 12) is allocated a rotary drive (17, 18), which has a motor (51, 52) a distributor gear (57, 58) consisting of belt drives (53, 54, 55, 56) and two spur gears (59, 60, 61, 62) where each motor (51, 52) is linked to the spur gear drives (59, 60, 61, 62) via the belt drives (53, 54, 55, 56) and that each spur gear (59, 60, 61, 62) with its primary shaft (71, 72, 73, 74) can swivel about a swivel axis (47, 48, 49, 50) and is connected to the friction roller (34, 35, 36, 37) with its drive shaft (63, 64, 65, 66).

2. Underfloor wheel set lathe as in claim 1 characterised in that the spur gears (59, 60, 61, 62) are of the same design.

3. Underfloor wheel set lathe as in claim 1, characterised in that each spur gear (59, 60, 61, 62) is a detachable gear.

**Revendications**

1. Tour à roues en fosse pour le reprofilage des contours de bandage d'essieux ferroviaires, avec deux paires de rouleaux de friction (11, 12) entraînés qui peuvent être pressées chacune sur un contour de bandage (3, 4) d'un essieu ferroviaire (6), les rouleaux de friction (34, 35, 36, 37) de chaque paire de rouleaux de friction (11, 12) pouvant pivoter individuellement autour d'un axe de pivotement (47, 48, 49, 50) disposé parallèlement à l'axe de l'essieu ferroviaire (38), caractérisé en ce qu'à chaque paire de rouleaux de friction (11, 12) est associée une commande en rotation (17, 18) constituée d'un moteur (51, 52), d'une transmission (57, 58) constituée de deux transmissions à courroies (53, 54, 55, 56) et de deux réducteurs à engrenages droits (59, 60, 61, 62), chaque moteur (51, 52) étant relié aux réducteurs à engrenages droits (59, 60, 61, 62) par les transmissions à courroie (53, 54, 55, 56) et en ce que chaque réducteur à engrenages droits (59, 60, 61, 62), par son arbre d'entrée (71, 72, 73, 74) est monté pivotant autour de l'axe de pivotement (47, 48, 49, 50) et est relié par son arbre de sortie (63, 64, 65, 66) aux rouleaux de friction (34, 35, 36, 37).

2. Tour à roues en fosse pour essieux ferroviaires selon la revendication 1, caractérisé en ce que les réducteurs à engrenages droits (59, 60, 61, 62) présentent la même disposition.

3. Tour à roues en fosse pour le reprofilage d'essieux ferroviaires selon la revendication 1, caractérisé en ce que chaque réducteur à engrenages droits (59, 60, 61, 62) est un réducteur à arbre creux.

Fig. 1

EP 0 181 456 B1

Fig. 2

EP 0 181 456 B1

# Fig. 3

**Fig. 4**

Fig. 5